(19) **Europäisches Patentamt**
**European Patent Office**
**Office européen des brevets**

(11) **EP 1 147 024 B1**

(12) **EUROPEAN PATENT SPECIFICATION**

(45) Date of publication and mention
of the grant of the patent:
**12.12.2007 Bulletin 2007/50**

(51) Int Cl.:
*B60H 1/00* *(2006.01)*    *H05B 3/34* *(2006.01)*
*B60N 2/56* *(2006.01)*

(21) Application number: **00911629.4**

(22) Date of filing: **24.01.2000**

(86) International application number:
**PCT/US2000/001702**

(87) International publication number:
**WO 2000/043225 (27.07.2000 Gazette 2000/30)**

(54) **SELF REGULATING FLEXIBLE HEATER**

SELBSTREGELENDES FLEXIBLES HEIZELEMENT

CHAUFFAGE SOUPLE AUTOREGULATEUR

(84) Designated Contracting States:
**AT BE CH CY DE DK ES FI FR GB GR IE IT LI LU MC NL PT SE**

(30) Priority: **25.01.1999 US 117144 P**

(43) Date of publication of application:
**24.10.2001 Bulletin 2001/43**

(60) Divisional application:
**06027130.1 / 1 764 244**

(73) Proprietor: **ILLINOIS TOOL WORKS INC.**
**Glenview,**
**Illinois 60025 (US)**

(72) Inventors:
- **KISH, Fred, A. DI**
**deceased (US)**

- **SURJAN, James**
**St. Charles, IL 60175 (US)**
- **VARMA, Tilak, R.**
**Grayslake, IL 60030 (US)**
- **BULGAJEWSKI, Edward**
**Genoa, IL 60135 (US)**

(74) Representative: **Vetter, Ewald Otto et al**
**Meissner, Bolte & Partner**
**Anwaltssozietät GbR**
**Postfach 10 26 05**
**86016 Augsburg (DE)**

(56) References cited:
| | |
|---|---|
| EP-A- 0 202 896 | US-A- 4 399 347 |
| US-A- 4 719 335 | US-A- 4 761 541 |
| US-A- 4 845 343 | US-A- 4 857 711 |
| US-A- 5 111 025 | US-A- 5 197 595 |
| US-A- 5 451 747 | US-A- 5 824 996 |
| US-A- 5 851 588 | US-A- 5 961 869 |

**Description**

Field of the Invention

The invention relates to a self-regulating flexible heater construction suited for use in automobile components but which has use in other applications, including but not limited to furniture pieces, consumer items, construction materials, and other articles. The flexible heater construction is comprised of a breathable fabric substrate to which is applied a coating of a conductive material and a coating of positive temperature coefficient ("PTC") material. The conductive material is in electrical contact with a power source. The PTC material regulates the temperature of the heater.

Within the automotive field, the present invention can be employed as a seat heater and, to provide a non-exhaustive list of other applications, as a heater for dashboards, steering wheels, stick shifts (for manual and automatic transmissions), mirrors, arm rests, and others.

Background of the Invention

Heating devices with temperature self-regulating properties are used in the automotive industry. However, such heaters are employed where flexibility of the heater is not at issue. For example, such heaters are used on mirrors located outside of the vehicle. These heaters are printed upon a rigid biaxially oriented polyester film. See. e.g. U.S. Patent nos. 4.931.627 and 4.857.711, both assigned to the assignee of the present application.

Heaters for automotive vehicle seats that are currently available offer less than adequate performance due to several undesirable attributes. Current heaters are known to build up static electricity, which damages the heater controller circuit when it is discharged. Another shortcoming is that current seat heater design, in which the heater elements are copper wire and design creates several problems in that heating is localized to the area of the wires, creating an undesirable heating pattern where the areas in the vicinity of the wire are too hot and areas removed from the wire are too cool. Moreover, since the heating wire per se does not possess any means for regulating the temperature (that is, copper wire and the like is incapable of sensing that it has become too hot), a sophisticated temperature controller is required for regulating the temperature of the seat heater. This creates a challenging design problem for the engineer, which could be avoided if the heater construction per se was self-regulating and could increase or decrease the amount of heat produced as necessary.

Furthermore, when heating a seat in an automotive vehicle, it is evident that the seat heater construction must be flexible, durable, and able to withstand the demands of the operating environment, which include the potentially degradative effects of prolonged exposure to heat and the flow of electricity.

It would be desirable if a heater for an automotive seat were deigned so that a uniform amount of heat could be distributed over the area to be heated. Likewise it would be desirable if a seat heater could be designed in which, if desired, the amount of heat delivered to particular area could be varied as a design parameter, so that if it is deemed that certain areas should be warmer than others for a given design (or cooler, as the case may be), the heater could be constructed to accommodate this variation.

Furthermore, since the comfort of a vehicle seat is attributable to its flexibility, it would be desirable if the seat heater construction was flexible so that its presence in the seat complimented the other flexible components of the seat construction. It would be additionally desirable if the seat heater construction incorporated a flexible fabric layer. It would be highly advantageous if the heater components could be applied to the fabric using well known printing and coating techniques, which could be used to construct a heater quickly and easily, and relatively cheaply. Also, application techniques such as printing or coating could be used to make uniform or varying applications of component materials, which could provide for the uniform distribution of heat, or if desired, variations in the amount of heat.

Positive temperature coefficient (PTC) materials exhibit variable electrical resistance with temperature. As the temperature of the material increases, the electrical resistance also increases. The resistivity of the material increases so current flow is reduced, limiting heat flow. In essence, positive temperature coefficient compositions are used to form temperature self-regulating coatings. PTC materials are known in the art. Exemplary disclosures concerning these materials can be found in U.S. Patent nos. 5,206,482 and 5,151,747, among others.

From US 4,845,343 an electrical heater is known which includes a fabric prepared from electrodes and a heating element which is composed of a conductive polymer. It would be desirable to design a heater so that the uniformity of the heat distribution could be improved. A similar heater is known from US 4,719,335 while from US 4,436,986 a safety circuit for deenergizing an electric blanket of a heating element with a PTC-material is known.

Summary of the Invention

The present invention is directed to a self regulating flexible heater, such as a heater for use in automobiles and other vehicles, in which a PTC material and conductive material are applied to a woven or non-woven fabric that is constructed of natural or synthetic fibers.

An electrical buss system of a conductive material is applied over a fabric before or after being coated with a PTC material. The conductive material is applied in an interdigitating pattern emanating from multiple buss bars. The buss bars are configured such that the heater offers uniform heating across the surface of the heater. The amount of heat generated may also be varied as a design parameter so that certain regions generate more or less heat as desired. The buss bars can be connected to the power source by a variety of interconnection devices such as fasteners, terminals conductive epoxies, to name a few of a broad range of interconnecting means that would be within the realm of the skilled artisan. Wire connectors are attached to the terminals and the wire from the power source. Preferably, a secondary layer is applied over the heater construction, such as an adhesive layer or a breathable fabric. The breathable fabric may be one that is breathable by virtue of the material that is used, or one that is machined to be breathable, such as by needle punching.

The heater element is applied just under the external layer of the vehicle seat, preferably as close to the end user as possible. The heater element is placed on the base of the seat, or on the back of the seat, or both. Preferably, the coating of PTC material has a weight of $1.035 \times 10^{-2}$ kg/m$^2$ to $2.959 \times 10^{-2}$ kg/m$^2$ (7 to 20 lbs per ream) (that is 306.58 m$^2$ (3300 ft.$^2$)) and a surface resistivity of 2 to 10 kilo-ohms as measured by multimeter probes set 1 cm apart. More preferably the coating of PTC material has a surface resistivity of 3 to 8 kilo-ohms as measured by multimeter probes set 1 cm apart.

Suitable materials for the fabric substrate include woven and non-woven fabric constructions of material including but not limited to polyesters, polyamides, polyaramids, polyimides, polyetherketones, glass fibers, phenolics, and carbon fibers. With respect to the fabric selection process, it has been found that heater constructions having a bulk density of about 0.6 g/cm$^3$ or greater and a thermal diffusivity of about 0.003 cm$^2$/s or greater insures a desirable degree of conductivity and heat flow through the fabric. This can be achieved using multifilaments with a relatively high number of twists per inch. However, a high degree of twists, or even using high denier fibers, reduces fabric flexibility. Accordingly, the skilled artisan should strike a balance between these properties.

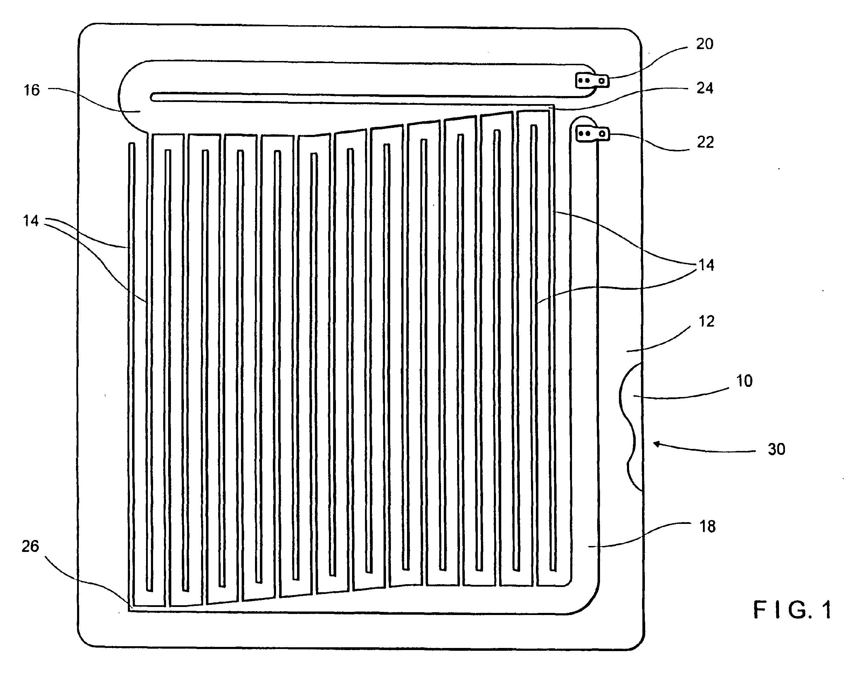

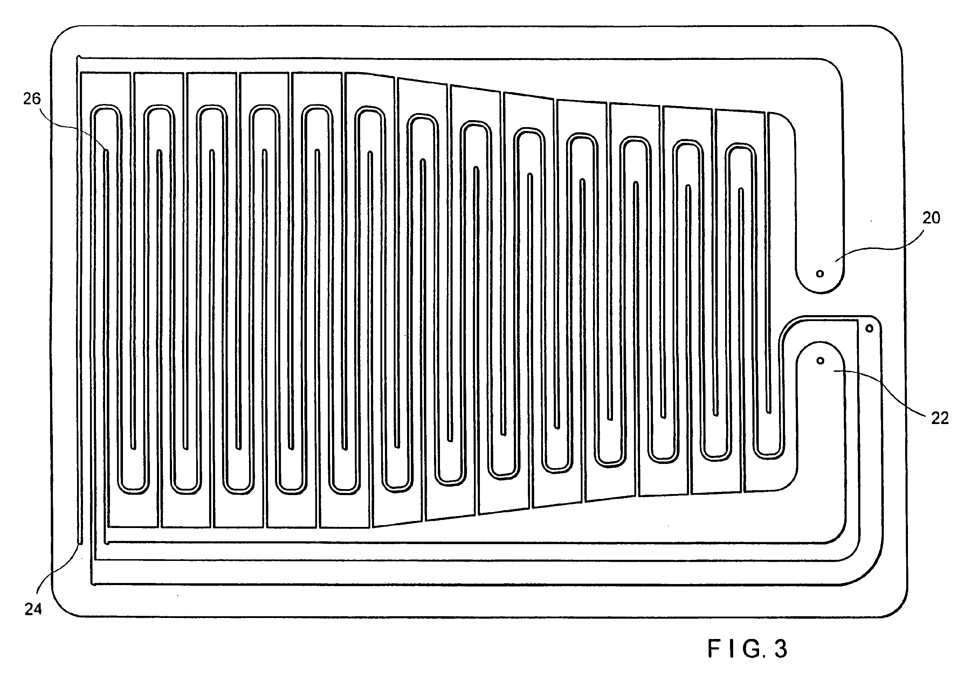

The heating element may comprise a coating formed from a composition of a conductive material of electrically conductive particles dispersed in a polymer matrix, and a coating of a PTC material. In the self-regulating heater of the present invention, the heating element is in thermal communication with the component to be heated, such as the automobile seat. Preferably, the PTC material is coated onto a woven or non-woven fabric. The conductive material is applied, either before or after the PTC material is applied. The conductive material is coated onto the fabric in an interdigitating pattern of electrodes which forms an electrical buss system, which can be constructed in a variety of patterns, such as in a tapered shape (see e.g., Figure 1), a stepped shaped, in which size varies in a step arrangement, or in a straight, or constant size over the entire construction. (see e.g., Figure 3) A trim pattern is also possible in which voids are present in the busses at preselected locations. The edges of the buss system are connected to multiple buss bars in electrical contact with a power source.

In one aspect of the present invention, the self-regulating flexible heater is a coated fabric whose construction has a bulk density of about 0.6 g/cm$^3$ or greater and a thermal diffusivity of about 0.003 cm$^2$/s.

In another aspect of the invention, an encapsulating coating, which may be a flame retardant coating, is applied over the heater elements by lamination or the or other known techniques.

Brief Description of the Drawings

Figure I is a top plan view showing the heater of the present invention.

Figure 2 is a top plan view of the circuit of a dual wattage self-regulating flexible heater construction.

Figure 3 is a top plan view of a self-regulating flexible heater construction having a tapered and straight buss bar arrangement.

Detailed Description of the Preferred Embodiment

In the preferred embodiment, a polyester woven or non-woven fabric 10 of a density of about $3.39 \times 10^{-2}$ kg/m$^2$ to $20.34 \times 10^{-2}$ kg/m$^2$ (1 to 6 ounces per square yard) (more preferably, about $12.54 \times 10^{-2}$ kg/m$^2$ (3.7 ounces per square yard)) is coated with a PTC material 12 such as commercially available PTC coating materials, such as an ethylene-vinyl acetate co-polymer resin available as Dupont 265. Such materials are described in U.S. Patent no. 4,857,711. The coating is applied at a weight of $1.92 \times 10^{-2}$ kg/m$^2$ (13 lbs per ream) (that is 306.58 m$^2$ (3300 ft.$^2$)) and resistivity of 2 to 10 kilo-ohms (more preferably, 3 to 8 kilo-ohms) as measured by multimeter probes set 1 cm apart.

Prior to application of the conductive material, the fabric is fully dried. The PTC layer 12 and conductive layer 14 are applied as discreet layers in any order of application. The conductive material 14 may be formulated from polymeric resins such as vinyls, polyesters, acrylics and conductive material such as silver pigment, a silver coated copper pigment, or plated copper pigments and/or solvating materials such as organic solvents, and water-based solvents which contain the conductive material. After thorough mixing, the coating is passed through a mill to effect final dispersion. Other conductive materials may be used such as conductive woven wires fixed within the construction by conductive glues. The applicants have found that these formulations are flexible while resisting cracking when bearing a load and when stretched.

The conductive material 14 is preferably applied in an interdigitating pattern (see Fig. 1) by a screen printing method, then fully dried, thereby forming an electrical buss system. Other methods may be used to apply the conductive material, including spraying, draw down applications, web printing, or other printing methods that provide a uniform coating. The conductive material is printed in electrode patterns which are interdigitated. Each electrode of the pattern is in electrical contact with one of a multiple of buss bars 16 and 18. with adjacent electrodes alternating their connection between buss bars 16 and 18. The buss bars are configured in a decreasingly tapered arrangement. That is the width of the buss bars gradually decreases from the terminal end (20, 22) to the free end (24, 26). This insures that the electrical resistance created by the buss bars will create a heating effect that is substantially the same as that created by the heating areas. One knowing the electrical characteristics of the PTC material, conductive material and temperature requirements can readily design heating areas of varying sizes and shapes with varying buss sizes that can deliver varying amounts of heat over the heating area. Accordingly, the entire substrate, from the center out of the periphery, including those areas beneath the buss bars, will be heated as desired with substantially no cold spots. It should be noted that while the connections to the heater construction are positioned along its edges, other configurations are possible, such as making a connections from the interior of the construction, or a combination of connections along the edges and in the interior.

Power across the heater construction can be varied by varying the spacing of the smaller busses. That is, the skilled artisan would readily appreciate that doing so would vary the power at any given location in the construction.

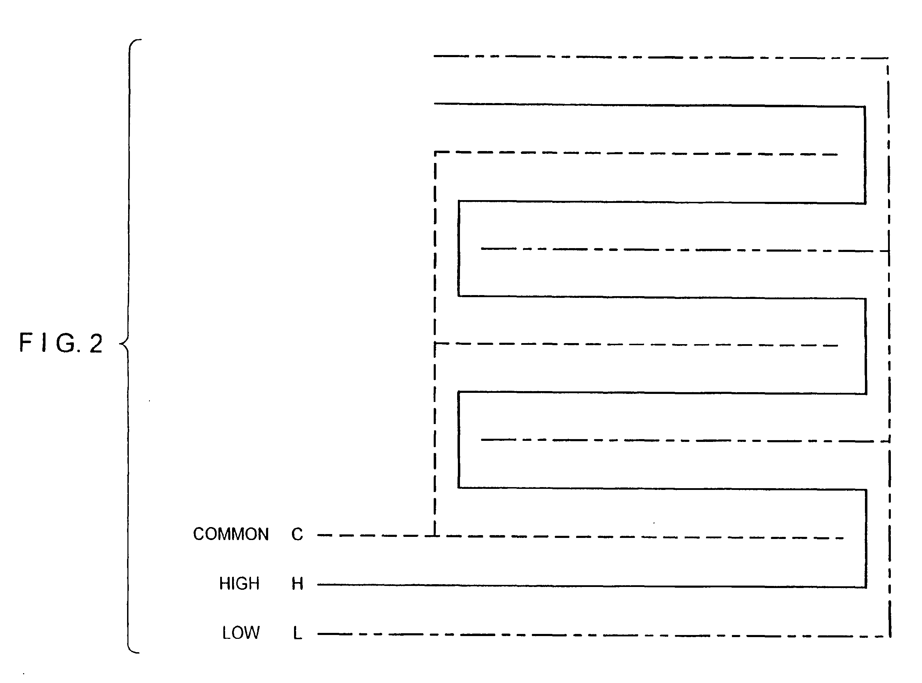

Figure 2 shows a circuit diagram for a self-regulating flexible heater design in accordance with the present invention which provides for a multiple wattage heater. As shown in this design, high/low settings are possible where current flows from either common to high buss arrangement or a common to low buss arrangement. Other combinations are possible based on other terminal connections

Terminals 20 and 22 are attached to the buss bars and are in communication with a power source (not shown). The terminals may be attached to the buss bars 16 and 18 by fasteners or any other means that will permit an electrical contact to be formed. A secondary protective layer, such as an encapsulating layer, may be laminated over the heater assembly 30.

When a voltage is applied across the terminals and across the electrode array, depending upon the ambient temperature and the electrical characteristics of the PTC material, current will flow through the PTC material between the electrodes, generating heat in the individual heating areas. The current flow and heating effect of the PTC material depends on its temperature which will change as the ambient temperature changes and, at a predetermined temperature of the PTC material, the resistivity of the material increases causing the material to no longer conduct current, whereby the heating areas no longer generate heat, or to produce a very low amount of heat due to a significantly reduced current flow. Accordingly, it can be seen that the heater is self- regulating in accordance with the surrounding ambient temperature.

Figure 3 depicts an alternative arrangement in which the width of the buss bars is a combination of a section where the size remains constant near the free end (24, 26), and a tapered section where the buss bars gradually decrease in size further away from the terminal end (20, 22).

The skilled artisan will readily appreciate that placing a safety switch at the terminals will prevent run away conditions during which the heat generated exceeds the upper limit that has been set in the design of the heater. The switch can be a simple on-off switch that permits the user to turn off the current flowing through the heater.

Example 1

The thermal diffusivity of five coated polyester fabric sample was determined.

The samples, identified as I through 5. differed in terms of the whether they are woven or non-woven, and if woven, the weave pattern, number of picks per inch, ends per inch, number of filaments in the warp and filling yarns, and twists per inch in the yarns. These fabrics were submitted as strips of coated fabric approximately 500 mm long by 70 mm wide. Samples 12.7 mm in diameter were die cut from the strips for testing.

Thermal diffusivity of the samples was measured att 10° and 100° by the laser flash method utilizing a Holometrix Microflash instrument available from Holometrix Micromet. This instrument and method conform to ASTM E1461-92. "Standard Test Method for Thermal Diffusivity of Solids by the Flash Method". The test results are given after a description of the experimental procedure.

Thermal diffusivity is related to the steady-state thermal conductivity through the equation

$$D = \frac{\lambda}{C_p\rho}$$

where D is the thermal diffusivity, $\lambda$ is the thermal conductivity, $C_p$ is the specific heat, and $\rho$ is the density. The diffusivity is a measure of how quickly a body can change its temperature; it increases with the ability of a body to conduct heat ($\lambda$) and it decreases with the amount of heat needed to change the temperature of a body ($C_p$). All three quantities on the right hand side of Equation (1), as well as the thermal diffusivity, can be functions of temperature.

The measurement of the thermal diffusivity of a material is usually carried out by rapidly heating one side of a sample and measuring the temperature rise curve on the opposite side. The time that it takes for the heat to travel through the sample and cause the temperature to rise on the rear face can be used to measure the through -plane diffusivity and calculate the through-plane thermal conductivity if the specific heat and density are known.

Through-Plane Method and Analysis

The sample is a disk with a standard diameter of 12.7 mm and a thickness ranging from about 0.1 to 3 mm. With the Holometrix Thermaflash 2200 Laser Flash system, the sample disk is aligned between a neodymium glass laser (1.06 $\mu$m wavelength. 330 $\mu$s pulse width) and an indium antimonide (InSb) IR detector in a tantalum tube furnace. A type C thermocouple in contact with the sample controls the sample and its surroundings at any temperature between 20 and 2000°C. Once the sample has been stabilized at the desired temperature, the laser is fired several times over a span of a few minutes and the necessary data is recorded for each laser "shot". The laser beam energy strikes and is absorbed by the front surface of the sample, causing a heat pulse to travel through the thickness of the sample. The resulting sample temperature rise is fairly small, ranging from about 0.5 to 2 degrees C. This temperature rise is kept in the optimum range by adjustable filters between the laser and the furnace. A lens focuses the back surface image of the sample onto the detector and the temperature rise signal vs. time is amplified and recorded with a high speed A/D converter.

Conductivity

The sample thermal conductivity can be calculated with Equation (1), after a measurement of the diffusivity as described above, and with measurements of the sample specific heat and bulk density. The bulk density is normally calculated from the measured sample volume (calculated from the measured dimensions) and mass.

Test Results

The measured values of thickness, bulk density and thermal diffusivity are given in table 1 below. The results have not been corrected for thermal expansion. The samples were coated with approximately 5 $\mu$m of graphite for thermal diffusivity testing. The second column from the right in Table 1 lists the standard deviation as a percentage of the mean diffusivity for the five to ten laser "shots" taken for each data point. The bulk density values are estimated to be accurate to within $\pm$5%.

**Table 1**

| Laser Flash Thermal Diffusivity Results | | | | | |
|---|---|---|---|---|---|
| | Thickness @ 25°C | Bulk Density @ 25°C | Temperature Tested | Thermal Diffusivity $\alpha$ | Fabric Type |
| Sample | (mm) | (g/cm$^3$) | (°C) | (cm$^2$/s) | |
| 1 | 0.288 | 0.634 | 10<br>100 | 0.00360<br>0.00297 | B-3<br>Polyester |
| 2 | 0.180 | 0.555 | 10<br>100 | 0.00647<br>0.00562 | B-2<br>Polyester |
| 3 | 0.220 | 0.677 | 10<br>100 | 0.00617<br>0.00505 | IFC 322-222<br>Polyester |

(continued)

| Laser Flash Thermal Diffusivity Results | | | | | |
|---|---|---|---|---|---|
| | Thickness @ 25°C | Bulk Density @ 25°C | Temperature Tested | Thermal Diffusivity $\alpha$ | Fabric Type |
| 4 | 0.269 | 0.510 | 10<br>100 | 0.00242<br>0.00205 | non-Woven Polyester |
| 5 | 0.556 | 0.910 | 10<br>100 | 0.00255<br>0.00203 | PUR Coated Polyester |
| Note:Thermal Diffusivities are an average of 5 readings. | | | | | |

Example 2

The five polyester test samples discussed in example I were tested to determine if they would break down when subjected to extended period of operation. The samples were coated with PTC material. After drying a silver pigment was applied on top of the PTC material. These self-regulating flexible heater constructions were subjected to a 12 volt DC potential for an extended, continuous period. Heat continued to rise in the constructions, until steady state was attained for construction nos. 1 and 3. These constructions exhibited sufficient heat resistance. Constructions 2, 4 and 5 were destroyed before reaching steady state. That is, the "failed" heater constructions burned up during testing as a result of heat generated during heater operation. It is noted that the fabrics which passed exhibited a bulk density of at least about 0.6 g/cm$^3$ or greater and a thermal diffusivity of at least about 0.003 cm$^2$/s.

| Laser Flash Thermal Diffusivity Results | | | | | |
|---|---|---|---|---|---|
| | Thickness @ 25°C | Bulk Density @ 25°C | Temperature Tested | Thermal Diffusivity $\alpha$ | Fabric Type | Heater Construction |
| Sample | (mm) | (g/cm$^3$) | (°C) | (cm$^2$/s) | | Pass/Fail |
| 1 | 0.288 | 0.634 | 10<br>100 | 0.00360<br>0.00297 | B-3 Polyester | Barely Passed |
| 2 | 0.180 | 0.555 | 10<br>100 | 0.00647<br>0.00562 | B-2 Polyester | Failed |
| 3 | 0.220 | 0.677 | 10<br>100 | 0.00617<br>0.00505 | IFC 322-222 Polyester | Passed |
| 4 | 0.269 | 0.510 | 10<br>100 | 0.00242<br>0.00205 | non-Woven Polyester | Failed |
| 5 | 0.556 | 0.910 | 10<br>100 | 0.00255<br>0.00203 | PUR Coated Polyester | Failed |
| Note: Thermal Diffusivities are an average of 5 readings. | | | | | |

With respect to the fabric selection process, it has been found that heater constructions having a bulk density of about 0.6 g/cm$^3$ or greater and a thermal diffusivity of about 0.003 cm$^2$/s or greater insures a desirable degree of conductivity and heat flow through the fabric. This can be achieved using multifilaments with a relatively high number of twists per inch. However, a high degree of twists, or even using high denier fibers, reduces fabric flexibility. Accordingly, the skilled artisan should strike a balance between these properties.

Though described in its preferred embodiment as a seat heater for automobiles, it should be understood that the self-regulating flexible heater construction of the present invention is suited for use not only in automobile components but has use in other applications, including but not limited to furniture pieces, consumer items, construction materials, and other articles. Accordingly, the preceding disclosure should be read as providing context to the invention, and not as a limitation on the field of use thereof.

Having described the preferred construction of the invention, those skilled in the art having the benefit of the description, can readily devise other modifications and such other modifications are to be considered to be within the scope of the appended claims.

## Claims

1. A self regulating flexible heater construction (30) for producing heat when connected to an electrical power source, comprised of:

   a flexible fabric substrate (10);
   a layer (12) of a positive temperature coefficient material ; and
   a layer (14) of conductive material,

   **characterized in that**
   the flexible fabric substrate (10) has a bulk density of about 0.6 g/cm$^3$ or greater and a thermal diffusivity of about 0.003 cm$^2$/s or greater.

2. The heater (30) of claim 1
   **characterized in that**
   the layer (14) of conductive material is applied to the layer (12) of positive temperature coefficient material in an interdigitated pattern and/or the layer (12) of positive temperature coefficient material is applied to the layer (14) of conductive material in an interdigitated pattern and **in that**
   the heater further comprises an overlayer of a laminated or sewn secondary breathable woven or non-woven fabric comprised of natural or synthetic fibres which covers the heater, wherein the overlayer is an encapsulating coating, which may be a flame retardant coating, which is applied over the heater, wherein the heater is incorporated within a construction of a seat for an automobile.

3. The heater (30) of claim 1
   **characterized in that**
   the heater (30) has a multiple buss design providing for high and low current settings, comprised of at least a common setting buss, a low setting buss, and a high setting buss, in which current flows from either the common setting buss to high setting buss or from the common setting buss to low setting buss.

4. The heater (30) of anyone of the preceding claims,
   **characterized in that**
   the substrate is woven or non-woven fabric (10).

5. The heater (30) of anyone of claims 1, 3 or 4,
   **characterized in that**
   the layer (14) of conductive material is applied to the layer (12) of positive temperature coefficient material in an interdigitated pattern.

6. The heater (30) of anyone of claims 1 or 3 to 5,
   **characterized in that**
   the layer (12) of positive temperature coefficient material is applied to the layer (14) of conductive material in an interdigitated pattern.

7. The heater (30) of anyone of the preceding claims,
   **characterized in that**
   the density of the fabric (10) is 3.39 x 10$^{-2}$ kg/m$^2$ to 20.34 x 10$^{-2}$ kg/m$^2$ (1 to 6 ounces per square yard).

8. The heater (30) of anyone of the preceding claims,
   **characterized in that**
   the PTC material is comprised of a polyolefin resin.

9. The heater (30) of anyone of the preceding claims,
   **characterized in that**
   the coating of PTC material has a weight of 1.035 x 10$^{-2}$ kg/m$^2$ to 2.959 x 10$^{-2}$ kg/m$^2$ (7 to 20 lbs. per ream).

**10.** The heater (30) of anyone of the preceding claims,
**characterized in that**
the positive temperature coefficient material has a surface resistivity of 2 to 10 kilo-ohms as measured by multimeter probes set 1 cm apart.

**11.** The heater (30) of anyone of the claims 1 to 9,
**characterized in that**
the positive temperature coefficient material has a surface resistivity of 3 to 8 kilo-ohms as measured by multimeter probes set 1 cm apart.

**12.** The heater (30) of anyone of the preceding claims,
**characterized in that**
the conductive material is formulated from a mixture of a polymeric resin selected from the group consisting of vinyls, polyesters, acrylics and a conductive material selected from the group consisting of silver pigment, a silver coated copper pigment, or plated copper pigments.

**13.** The heater (30) of anyone of the preceding claims,
**characterized in that**
the conductive material is formulated from a mixture of solvating materials selected from the group consisting of organic solvents and water based solvents and a conductive material selected from the group consisting of silver pigment, a silver coated copper pigment, or plated copper pigments.

**14.** The heater (30) of anyone of claims 1 to 11,
**characterized in that**
the conductive material is constructed of conductive wires fixed within the construction by conductive glues.

**15.** The heater (30) of anyone of the preceding claims,
**characterized in that**
the first (12) and second (14) layers are applied to the substrate by screen printing, spraying, draw down, web printing or any printing method capable of providing a uniform coating.

**16.** The heater (30) of anyone of the preceding claims,
**characterized by**
being further comprised of a plurality of buss bars (16, 18) in electrical contact with the conductive material and an electrical power source.

**17.** The heater (30) of claim 16,
**characterized in that**
the buss bars (16, 18) have a width dimension and a length dimension, and wherein the width decreases over at least a portion of its length.

**18.** The heater (30) of claim 16,
**characterized in that**
the buss bars (16, 18) have a width dimension and a length dimension, and wherein the width remains constant over at least a portion of its length.

**19.** The heater (30) of anyone of claims 16 to 18,
**characterized in that**
the buss bars (16, 18) have a width dimension and a length dimension, and at least one void at a predetermined location along its length.

**20.** The heater (30) of claim 16 or 19,
**characterized in that**
the buss bars (16, 18) have a width dimension and a length dimension, and wherein the width dimension increases step-wise over at least a portion of its length.

**21.** The heater (30) of anyone of claims 16 to 20,
**characterized in that**

the spacing of the busses varies across the heater.

**22.** The heater (30) of anyone of claims 1 or 3 to 21,
**characterized by**
being further comprised of an overlayer of a laminated or sewn secondary breathable woven or non-woven fabric comprised of natural or synthetic fibers which covers the heater.

**23.** The heater (30) of claim 22,
**characterized in that**
the overlayer is an encapsulating coating, which may be a flame retardant coating, which is applied over the heater.

**24.** The heater (30) of anyone of claims 1 or 3 to 23,
**characterized in that**
the heater (30) is incorporated within a construction of a seat for an automobile.

**25.** The heater (30) of anyone of the claims 1, 2 or 4 to 24,
**characterized in that**
the heater (30) has a multiple buss design providing for high and low current settings, comprised of at least a common setting buss, a low setting buss, and a high setting buss, in which current flows from either the common setting buss to high setting buss or from the common setting buss to low setting buss.

**Patentansprüche**

**1.** Selbstregulierende flexible Heizelementkonstruktion (30) zum Erzeugen von Wärme bei Anschluss an eine elektrische Stromquelle, umfassend:

ein flexibles Gewebesubstrat (10);
eine Schicht (12) aus einem Material mit einem positiven Temperaturkoeffizienten; und
eine Schicht (14) aus leitfähigem Material,

**dadurch gekennzeichnet, dass**
das flexible Gewebesubstrat (10) eine Rohdichte von etwa 0,6 g/cm$^3$ oder höher und ein thermisches Diffusionsvermögen von etwa 0,003 cm$^2$/s oder höher aufweist.

**2.** Heizelement (30) nach Anspruch 1,
**dadurch gekennzeichnet, dass**
die Schicht (14) aus leitfähigem Material auf die Schicht (12) aus Material mit einem positiven Temperaturkoeffizienten in einem ineinandergreifenden Muster aufgetragen ist und/oder die Schicht (12) aus Material mit einem positiven Temperaturkoeffizienten auf die Schicht (14) aus leitfähigem Material in einem ineinandergreifenden Muster aufgetragen ist, und **dadurch** dass
das Heizelement ferner eine Deckschicht aus einem laminierten oder gehefteten sekundären atmungsaktiven Gewebe oder Faservlies aufweisend natürliche oder synthetische Fasern umfasst, welche das Heizelement bedeckt, wobei die Deckschicht eine verkapselnde Beschichtung ist, bei welcher es sich um eine flammhemmende Beschichtung handeln kann, welche über das Heizelement aufgetragen ist, wobei das Heizelement in eine Konstruktion eines Sitzes für ein Auto integriert ist.

**3.** Heizelement (30) nach Anspruch 1,
**dadurch gekennzeichnet, dass**
das Heizelement (30) ein Mehrfachbus-Design aufweist, welches hohe und niedrige Stromeinstellungen bereitstellt, umfassend mindestens einen gemeinsamen Einstellungsbus, einen Niedrigeinstellungsbus und einen Hocheinstellungsbus, in welchem Strom entweder vom gemeinsamen Einstellungsbus zum Hocheinstellungsbus oder vom gemeinsamen Einstellungsbus zum Niedrigeinstellungsbus fließt.

**4.** Heizelement (30) nach einem der vorhergehenden Ansprüche,
**dadurch gekennzeichnet, dass**
das Substrat ein Gewebe oder Faservlies (10) ist.

5. Heizelement (30) nach einem der Ansprüche 1, 3 oder 4,
**dadurch gekennzeichnet, dass**
die Schicht (14) aus leitfähigem Material auf die Schicht (12) aus Material mit einem positiven Temperaturkoeffizienten in einem ineinandergreifenden Muster aufgetragen ist.

6. Heizelement (30) nach einem der Ansprüche 1 oder 3 bis 5,
**dadurch gekennzeichnet, dass**
die Schicht (12) aus Material mit einem positiven Temperaturkoeffizienten auf die Schicht (14) aus leitfähigem Material in einem ineinandergreifenden Muster aufgetragen ist.

7. Heizelement (30) nach einem der vorhergehenden Ansprüche,
**dadurch gekennzeichnet, dass**
die Dichte des Gewebes (10) $3{,}39 \times 10^{-2}$ kg/m$^2$ bis $20{,}34 \times 10^{-2}$ kg/m$^2$ (1 bis 6 Unzen pro Quadratyard) ist.

8. Heizelement (30) nach einem der vorhergehenden Ansprüche,
**dadurch gekennzeichnet, dass**
das PTC-Material ein Polyolefinharz umfasst.

9. Heizelement (30) nach einem der vorhergehenden Ansprüche,
**dadurch gekennzeichnet, dass**
die Beschichtung aus PTC-Material ein Gewicht von $1{,}035 \times 10^{-2}$ kg/m$^2$ bis $2{,}959 \times 10^{-2}$ kg/m$^2$ (7 bis 20 Pfund pro Bogen) aufweist.

10. Heizelement (30) nach einem der vorhergehenden Ansprüche,
**dadurch gekennzeichnet, dass**
das Material mit einem positiven Temperaturkoeffizienten einen Oberflächenwiderstand von 2 bis 10 Kilo-Ohm, wie gemessen durch 1 cm voneinander entfernt eingestellte Multimetersonden, aufweist.

11. Heizelement (30) nach einem der Ansprüche 1 bis 9,
**dadurch gekennzeichnet, dass**
das Material mit einem positiven Temperaturkoeffizienten einen Oberflächenwiderstand von 3 bis 8 Kilo-Ohm, wie gemessen durch 1 cm voneinander entfernt eingestellte Multimetersonden, aufweist.

12. Heizelement (30) nach einem der vorhergehenden Ansprüche,
**dadurch gekennzeichnet, dass**
das leitfähige Material aus einer Mischung aus einem Polymerharz ausgewählt aus der Gruppe bestehend aus Vinylen, Polyestern, Acrylen und einem leitfähigen Material ausgewählt aus der Gruppe bestehend aus Silberpigment, einem silberbeschichteten Kupferpigment oder plattierten Kupferpigmenten formuliert ist.

13. Heizelement (30) nach einem der vorhergehenden Ansprüche,
**dadurch gekennzeichnet, dass**
das leitfähige Material aus einer Mischung aus solvatisierenden Materialien ausgewählt aus der Gruppe bestehend aus organischen Lösemitteln und wasserbasierten Lösemitteln und einem leitfähigen Material ausgewählt aus der Gruppe bestehend aus Silberpigment, einem silberbeschichteten Kupferpigment oder plattierten Kupferpigmenten formuliert ist.

14. Heizelement (30) nach einem der Ansprüche 1 bis 11,
**dadurch gekennzeichnet, dass**
das leitfähige Material aus leitfähigen Drähten befestigt innerhalb der Konstruktion durch leitfähige Leime konstruiert ist.

15. Heizelement (30) nach einem der vorhergehenden Ansprüche,
**dadurch gekennzeichnet, dass**
die erste (12) und zweite (14) Schicht durch Siebdruck, Aufsprühen, Abziehen, Rollendruck oder jegliches Druckverfahren, welches zum Bereitstellen einer regelmäßigen Beschichtung in der Lage ist, auf das Substrat aufgetragen wird.

16. Heizelement (30) nach einem der vorhergehenden Ansprüche,

**dadurch gekennzeichnet, dass**
es ferner mehrere Busschienen (16, 18) in elektrischem Kontakt mit dem leitfähigen Material und einer elektrischen Stromquelle umfasst.

**17.** Heizelement (30) nach Anspruch 16,
**dadurch gekennzeichnet, dass**
die Busschienen (16, 18) eine Breitenabmessung und eine Längenabmessung aufweisen, und wobei sich die Breite über mindestens einen Teil ihrer Länge verringert.

**18.** Heizelement (30) nach Anspruch 16,
**dadurch gekennzeichnet, dass**
die Busschienen (16, 18) eine Breitenabmessung und eine Längenabmessung aufweisen, und wobei die Breite über mindestens einen Teil ihrer Länge konstant bleibt.

**19.** Heizelement (30) nach einem der Ansprüche 16 bis 18,
**dadurch gekennzeichnet, dass**
die Busschienen (16, 18) eine Breitenabmessung und eine Längenabmessung und mindestens eine Aussparung an einer vorbestimmten Stelle entlang ihrer Länge aufweisen.

**20.** Heizelement (30) nach Anspruch 16 oder 19,
**dadurch gekennzeichnet, dass**
die Busschienen (16, 18) eine Breitenabmessung und eine Längenabmessung aufweisen, und wobei die Breitenabmessung schrittweise über mindestens einen Teil ihrer Länge zunimmt.

**21.** Heizelement (30) nach einem der Ansprüche 16 bis 20,
**dadurch gekennzeichnet, dass**
der Abstand der Busse über das Heizelement hinweg variiert.

**22.** Heizelement (30) nach einem der Ansprüche 1 oder 3 bis 21,
**dadurch gekennzeichnet, dass**
es ferner eine Deckschicht aus einem laminierten oder gehefteten sekundären atmungsaktiven Gewebe oder Faservlies aufweisend natürliche oder synthetische Fasern umfasst, welche das Heizelement bedeckt.

**23.** Heizelement (30) nach Anspruch 22,
**dadurch gekennzeichnet, dass**
die Deckschicht eine verkapselnde Beschichtung ist, bei welcher es sich um eine flammhemmende Beschichtung handeln kann, welche über das Heizelement aufgetragen ist.

**24.** Heizelement (30) nach einem der Ansprüche 1 oder 3 bis 23,
**dadurch gekennzeichnet, dass**
das Heizelement (30) in eine Konstruktion eines Sitzes für ein Auto integriert ist.

**25.** Heizelement (30) nach einem der Ansprüche 1, 2 oder 4 bis 24,
**dadurch gekennzeichnet, dass**
das Heizelement (30) ein Mehrfachbus-Design aufweist, welches hohe und niedrige Stromeinstellungen bereitstellt, umfassend mindestens einen gemeinsamen Einstellungsbus, einen Niedrigeinstellungsbus und einen Hocheinstellungsbus, in welchem Strom entweder vom gemeinsamen Einstellungsbus zum Hocheinstellungsbus oder vom gemeinsamen Einstellungsbus zum Niedrigeinstellungsbus fließt.

**Revendications**

**1.** Structure de chauffage souple autorégulée (30) qui produit de la chaleur lorsqu'elle est reliée à une source d'énergie électrique, constituée de :

un support en toile flexible (10),
une couche (12) de matériau à coefficient de température positif,
une couche (14) de matériau conducteur,

**caractérisée en ce que**
le support de toile flexible (10) présente une masse spécifique apparente d'environ 0,6 g/cm$^3$ ou plus et une diffusivité thermique d'environ 0,003 cm$^2$/s ou plus.

2.  Dispositif de chauffage (30) selon la revendication 1, **caractérisé en ce que** la couche (14) de matériau conducteur est appliquée sur la couche (12) en matériau à coefficient de température positif suivant un motif d'entrelacement et/ou la couche (12) en matériau à coefficient de température positif est appliquée sur la couche (14) en matériau conducteur suivant un motif d'entrelacement et **en ce que** le dispositif de chauffage comprend de plus un recouvrement en un tissu que l'on peut ventiler, ce tissu étant tissé ou non tissé, secondaire, stratifié ou composé de fibres naturelles ou synthétiques et recouvrant le dispositif de chauffage, le recouvrement étant une couche d'enrobage qui peut être une couche en agent ignifuge, qui est appliquée par dessus le dispositif de chauffage, le dispositif de chauffage étant incorporé dans la structure d'un siège pour automobile.

3.  Dispositif de chauffage (30) selon la revendication 1, **caractérisé en ce que** le dispositif de chauffage (30) est conçu avec plusieurs bus prévus pour des réglages à courant fort ou à courant faible, constitué d'au moins un bus commun, un bus à courant faible et un bus à courant fort, le courant s'écoulant du bus commun vers le bus à courant fort ou du bus commun vers le bus à courant faible.

4.  Dispositif de chauffage (30) selon l'une quelconque des revendications précédentes, **caractérisé en ce que** le support est un tissu (10) tissé ou non tissé.

5.  Dispositif de chauffage (30) selon l'une quelconque des revendications 1, 3 ou 4, **caractérisé en ce que** la couche (14) en matériau conducteur est appliquée sur la couche (12) en matériau à coefficient de température positif suivant un motif d'entrelacement.

6.  Dispositif de chauffage (30) selon l'une quelconque des revendications 1 ou 3 à 5, **caractérisé en ce que** la couche (12) en matériau à coefficient de température positif est appliquée sur la couche (14) en matériau conducteur suivant un motif d'entrelacement.

7.  Dispositif de chauffage (30) selon l'une quelconque des revendications précédentes, **caractérisé en ce que** la masse du tissu (10) par unité de surface est comprise entre 3,39 x 10$^{-2}$ kg/m$^2$ et 20,34 x 10$^{-2}$ kg/m$^2$ (1 à 6 onces par yard carré).

8.  Dispositif de chauffage (30) selon l'une quelconque des revendications précédentes, **caractérisé en ce que** le matériau PTC («positive temperature coefficient» - à coefficient de température positif) est constitué d'une une résine de polyoléfine.

9.  Dispositif de chauffage (30) selon l'une quelconque des revendications précédentes, **caractérisé en ce que** le revêtement en matériau PTC présente une masse par unité de surface comprise entre 1,035 x 10$^{-2}$ kg/m$^2$ et 2,959 x 10$^{-2}$ kg/m$^2$ (7 à 20 livres par rame).

10. Dispositif de chauffage (30) selon l'une quelconque des revendications précédentes, **caractérisé en ce que** le matériau à coefficient de température positif présente une résistivité de surface comprise entre 2 et 10 kilo-ohms, la résistivité de surface étant mesurée en espaçant de 1 cm les sondes du multimètre.

11. Dispositif de chauffage (30) selon l'une quelconque des revendications 1 à 9, **caractérisé en ce que** le matériau à coefficient de température positive présente une résistivité de surface comprise entre 3 et 8 kilo-ohms, la résistivité de surface étant mesurée en espaçant de 1 cm les sondes du multimètre.

12. Dispositif de chauffage (30) selon l'une quelconque des revendications précédentes, **caractérisé en ce que** le matériau conducteur est formulé à partir d'un mélange de résines polymères sélectionnées dans l'ensemble constitué des vinyles, des polyesters et des résines acryliques et le matériau conducteur est sélectionné dans l'ensemble constitué des pigments à l'argent, des pigments à l'argent recouvert de cuivre et des pigments de cuivre plaqué.

13. Dispositif de chauffage (30) selon l'une quelconque des revendications précédentes, **caractérisé en ce que** le matériau conducteur est formulé à partir d'un mélange de matériaux de solvatation sélectionnés dans l'ensemble constitué des solvants organiques et des solvants à base d'eau et **en ce que** le matériau conducteur est sélectionné dans l'ensemble constitué des pigments à l'argent, des pigments à l'argent recouvert de cuivre et des pigments de cuivre plaqué.

**14.** Appareil de chauffage (30) selon l'une quelconque des revendications 1 à 11, **caractérisé en ce que** le matériau conducteur est construit à partir de câbles conducteurs fixés à l'intérieur de la structure à l'aide de colles conductrices.

**15.** Appareil de chauffage (30) selon l'une quelconque des revendications précédentes, **caractérisé en ce que** la première couche (12) et la deuxième couche (14) sont appliquées sur le support par sérigraphie, par pulvérisation, par étirage, par impression sur tissu ou par tout autre procédé d'impression qui permet d'obtenir un revêtement uniforme.

**16.** Appareil de chauffage (30) selon l'une quelconque des revendications précédentes, **caractérisé en ce qu'**il comprend de plus un ensemble de barres collectrices (16, 18) en contact électrique avec le matériau conducteur et une source d'énergie électrique.

**17.** Appareil de chauffage (30) selon la revendication 16, **caractérisé en ce que** les barres collectrices (16, 18) ont une dimension de largeur et une dimension de longueur, la largeur diminuant sur au moins une partie de la longueur.

**18.** Appareil de chauffage (30) selon la revendication 16, **caractérisé en ce que** les barres de bus (16, 18) ont une dimension de largeur et une dimension de longueur, la largeur restant constante sur au moins une partie de la longueur.

**19.** Appareil de chauffage (30) selon l'une quelconque des revendications 16 à 18, **caractérisé en ce que** les barres collectrices (16, 18) ont une dimension de largeur et une dimension de longueur et au moins un vide en un emplacement prédéterminé de la longueur.

**20.** Appareil de chauffage (30) selon les revendications 16 ou 19, **caractérisé en ce que** les barres collectrices (16, 18) ont une dimension de largeur et une dimension de longueur, la dimension de largeur augmentant progressivement sur au moins une partie de la longueur.

**21.** Appareil de chauffage (30) selon l'une quelconque des revendications 16 à 20, **caractérisé en ce que** l'espacement entre les bus varie à travers l'appareil de chauffage.

**22.** Appareil de chauffage (30) selon l'une quelconque des revendications 1 ou 3 à 21, **caractérisé en ce qu'**il comprend en outre un recouvrement en un tissu que l'on peut ventiler, tissé ou non tissé, secondaire, stratifié ou cousu qui est constitué de fibres naturelles ou synthétiques et qui recouvre l'appareil de chauffage.

**23.** Appareil de chauffage (30) selon la revendication 22, **caractérisé en ce que** le recouvrement est une couche d'enrobage qui peut être un revêtement ignifuge appliqué sur l'appareil de chauffage.

**24.** Appareil de chauffage (30) selon l'une quelconque des revendications 1 ou 3 à 23, **caractérisé en ce que** l'appareil de chauffage (30) est incorporé dans la structure d'un siège pour une automobile.

**25.** Appareil de chauffage (30) selon l'une quelconque des revendications 1, 2 ou 4 à 24, **caractérisé en ce que** le dispositif de chauffage (30) est conçu avec plusieurs bus qui permettent un réglage à courant fort et un réglage à courant faible et comprend au moins un bus commun, un bus à courant faible et un bus à courant fort, le courant s'écoulant du bus commun vers le bus à courant fort ou du bus commun vers le bus à courant faible.

FIG. 1

COMMON C

HIGH H

LOW L

FIG. 2

F I G. 3

**EP 1 147 024 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4931627 A
- US 4857711 A
- US 5206482 A
- US 5151747 A
- US 4845343 A
- US 4719335 A
- US 4436986 A